# EUROPÄISCHE PATENTANMELDUNG

(11) **EP 1 191 746 A2**
(43) Veröffentlichungstag der Anmeldung: **27.03.2002**
(21) Anmeldenummer: 01440306.7
(22) Anmeldetag: 17.09.2001
(51) Int. Cl.: H04L 12/28

(54) **Verfahren zum Betreiben eines vorzugsweise mobilen Telekommunikationssystems**

(30) Priorität: 22.09.2000 DE 10047002
(71) Anmelder: ALCATEL, 75008 Paris (FR)
(72) Erfinder: Laube, Manfred, 75219 Keltern (DE); Weiss, Manfred, 75242 Neuhausen (DE)
(74) Vertreter: Dreiss, Fuhlendorf, Steimle & Becker

(57) **Zusammenfassung**

Es wird ein Telekommunikationssystem beschrieben, das ein öffentliches Netzwerk (15) aufweist, mit dem wenigstens ein Endgerät über ein Anschlussgerät (17) gekoppelt ist. In dem Anschlussgerät (17) ist der Ort des Anschlussgeräts (17) abgespeichert. Der Ort des Anschlussgeräts (17) wird manuell eingegeben oder automatisch ermittelt.

## Beschreibung

Die Erfindung geht aus von einem Verfahren zum Betreiben eines vorzugsweise mobilen Telekommunikationssystems, bei dem wenigstens ein Endgerät über ein Anschlussgerät mit einem öffentlichen Netzwerk gekoppelt ist. Weiterhin geht die Erfindung von einem Telekommunikationssystem mit einem öffentlichen Netzwerk aus, mit dem wenigstens ein Endgerät über ein Anschlussgerät gekoppelt ist.

Bei dem Endgerät kann es sich beispielsweise um einen vorzugsweise mobilen Personalcomputer innerhalb eines LANs (Local Area Network), vorzugsweise innerhalb eines WLANs (Wireless Local Area Network) handeln. Mit Hilfe des Anschlussgeräts wird in diesem Fall der LAN und damit der Personalcomputer mit dem öffentlichen Netzwerk verbunden.

Ebenfalls kann es sich bei dem Endgerät um einen vorzugsweise mobilen Personalcomputer handeln, der nicht in einen LAN eingebunden ist. In diesem Fall kann es sich bei dem Anschlussgerät z.B. um ein Modem handeln, mit dem der Personalcomputer mit dem öffentlichen Netzwerk verbunden werden kann.

Im ersten Fall ist es möglich, dass der gesamte LAN bzw. WLAN an einen anderen Ort verbracht wird. Ist beispielsweise der LAN bzw. WLAN einer Baustelle zugeordnet, so kann der LAN bzw. WLAN nach Fertigstellung der Baustelle an einer anderen Baustelle und damit an einen anderen Ort wieder aufgebaut werden.

Im zweiten Fall ist es möglich, dass der Personalcomputer von seinem Benutzer zwischen verschiedenen Orten bewegt und dort benutzt wird.

Daraus entsteht das Problem, dass der Betrieb des LANs bzw. WLANs oder des Personalcomputers an den unterschiedlichen Orten gegebenenfalls unterschiedlich erfolgen muss. Dies muss in irgend einer Weise berücksichtigt werden.

Das vorgenannte Problem wird bei einem Verfahren der eingangs genannten Art erfindungsgemäß dadurch gelöst, dass der Ort des Anschlussgeräts manuell eingegeben oder automatisch ermittelt wird. Bei einem Telekommunikationssystem der eingangs genannten Art wird das Problem dadurch gelöst, dass in dem Anschlussgerät der Ort des Anschlussgeräts abgespeichert ist.

Der jeweils aktuelle Ort des Anschlussgeräts und damit der Ort des LANs bzw. WLANs oder des Personalcomputers ist somit bekannt und verwertbar. Daraus ergibt sich der Vorteil, dass dieser Ort bei dem Betrieb des jeweiligen Endgeräts berücksichtigt werden kann.

Im eingangs erstgenannten Fall wird damit erreicht, dass innerhalb eines LANs bzw. WLANs, der zu einer bestimmten Baustelle gehört, immer nur diejenigen Daten bereitgestellt werden, die die bestimmte Baustelle betreffen. Damit wird nicht nur der erforderliche Datenverkehr reduziert, es wird ebenfalls gewährleistet, dass z.B. immer die richtigen Baupläne auf der jeweils zugehörigen Baustelle vorhanden sind.

Im eingangs zweitgenannten Fall wird der Vorteil erreicht, dass der Benutzer an jedem Ort, an den er sich bewegt, immer nur diejenigen Daten beispielsweise über Tankstellen, Hotels usw. erhält, die für diesen Ort relevant sind. Hierdurch wird wiederum der Datenverkehr reduziert und zusätzlich der Bedienungskomfort für den Benutzer erhöht.

Bei einer vorteilhaften Ausgestaltung des erfindungsgemäßen Verfahrens wird der Ort des Anschlussgeräts mit Hilfe von Satelliten, insbesondere mit Hilfe von GPS-Satelliten ermittelt. Alternativ oder zusätzlich ist es möglich, dass der Ort des Anschlussgeräts mit Hilfe von Informationen ermittelt wird, die von schnurlosen öffentlichen Netzwerken, insbesondere von GSM- und UMTS-Netzwerken, ausgesendet werden.

Dies stellen besonders einfache und zweckmäßige Möglichkeiten dar, wie der Ort des Anschlussgeräts automatisch ermittelt werden kann. Insbesondere die GPS-abhängige Ermittlung dieses Orts ist besonders genau und zuverlässig.

Weiterhin ist es zweckmäßig, wenn an das öffentliche Netzwerk ein stationärer LAN angeschlossen ist, und wenn nur solche Daten von dem LAN an das Endgerät übermittelt werden, die zu dem Ort des Anschlussgeräts gehören. Auf diese Weise wird der Datenverkehr zwischen dem Endgerät und dem stationären LAN wesentlich reduziert mit allen daraus resultierenden Vorteilen.

Bei vorteilhaften Weiterbildungen des erfindungsgemäßen Telekommunikationssystems ist das Anschlussgerät mit Mitteln versehen zur automatischen Ermittlung des Orts des Anschlussgeräts. Dabei kann es sich um GPS- und/oder GSM-abhängige Mittel handeln.

Bei einer ersten Alternative sind das Endgerät und das Anschlussgerät Bestandteile eines vorzugsweise schnurlosen LANs. Dieser LAN bzw. WLAN kann dann beispielsweise nacheinander auf verschiedenen, örtlich unterschiedlichen Baustellen eingesetzt werden. Bei einer zweiten Alternative sind das Endgerät und das Anschlussgerät als ein integriertes Gerät, beispielsweise als ein Personalcomputer oder als ein Telefon, ausgebildet. Dieses integrierte Gerät kann dann von seinem Benutzer an unterschiedliche Orte bewegt und dort benutzt werden.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.
- Figur 1: zeigt ein schematisches Blockschaltbild eines ersten Ausführungsbeispiels eines erfindungsgemäßen Telekommunikationssystems, und
- Figur 2: zeigt ein schematisches Blockschaltbild eines zweiten Ausführungsbeispiels eines erfindungsgemäßen Telekommunikationssystems.

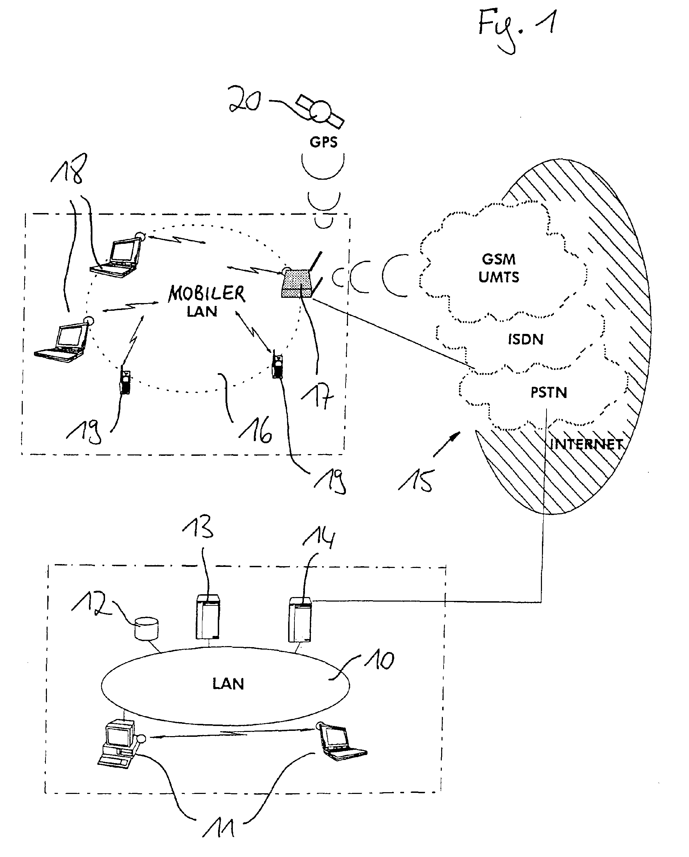

In der Figur 1 ist ein stationärer LAN (Local Area Network) 10 dargestellt, der beispielsweise in einem Unternehmen unter anderem dazu dient, die Kommunikation zwischen den Mitarbeitern und den Zugriff der Mitarbeiter auf Datenbanken zu ermöglichen. Hierzu sind an den LAN 10 stationäre und mobile Personalcomputer 11 der Mitarbeiter sowie Datenbanken 12 angeschlossen. Der Betrieb des LAN 10 wird mit Hilfe eines LAN Servers 13 durchgeführt.

Über einen sogenannten Router 14 ist der stationäre LAN 10 vorzugsweise schnurgebunden mit einem oder mehreren öffentlichen Netzwerken 15 verbunden. Dabei kann es sich um ein PSTN (Public Switched Telephone Network), ein ISDN (Integrated Services Digital Network), ein GSM (Global System for Mobile Communication), ein UMTS (Universal Mobile Telecommunication System), das Internet oder dergleichen handeln.

In der Figur 1 ist weiterhin ein mobiler LAN 16 dargestellt, der außerhalb des örtlichen Bereichs des stationären LANs 10 und damit örtlich entfernt zu dem stationären LAN 10 angeordnet ist. Der LAN 16 dient unter anderem dazu, dass Mitarbeiter des Unternehmens, die außerhalb des örtlichen Bereichs des stationären LANs 10 tätig sind, mit den anderen Mitarbeitern des Unternehmens kommunizieren und auf die Datenbanken 12 zugreifen können.

Zu diesem Zweck ist der mobile LAN 16 mit einem Anschlussgerät 17 versehen, das schnurlos und/oder schnurgebunden mit dem einen oder den mehreren öffentlichen Netzwerken 15 verbunden ist. Weiterhin weist der LAN 16 eine Mehrzahl von Endgeräten, vorzugsweise mobile Personalcomputer 18 und mobile Telefone 19 auf.

Handelt es sich beispielsweise um ein Bauunternehmen, so kann der mobile LAN 16 einer Baustelle zugeordnet sein, die von dem Unternehmen betreut wird. Mitarbeiter des Unternehmens, die auf dieser Baustelle tätig sind, können dann über den mobilen LAN 16 miteinander telefonieren sowie untereinander Daten austauschen. Weiterhin können diese Mitarbeiter von dem mobilen LAN 16 über die öffentlichen Netzwerke 15 auf den stationären LAN 10 zugreifen. Damit ist eine Kommunikation der auf der Baustelle und damit im Bereich des mobilen LANs 16 befindlichen Mitarbeiter mit den innerhalb des Bereichs des stationären LANs 10 befindlichen Mitarbeiter möglich. Ebenfalls können die auf der Baustelle befindlichen Mitarbeiter auf die Datenbanken 12 des stationären LAN 10 zugreifen.

Das Anschlussgerät 17 ist dazu geeignet, seinen eigenen Ort und damit den Ort des mobilen LANs 16 abzuspeichern. Dieser Ort kann auf verschiedene Arten zur Verfügung gestellt werden.

Es ist möglich, dass der Ort in der Form von Koordinaten oder auch in anderer Weise manuell dem Anschlussgerät 17 eingegeben wird. Diese Eingabe kann beispielsweise dann erfolgen, wenn die Baustelle neu eröffnet wird.

Es ist ebenfalls möglich, dass der Ort des Anschlussgeräts 17 und damit der Ort des mobilen LANs 16 automatisch ermittelt wird. Dies kann von dem Anschlussgerät 17 selbst durchgeführt werden. Hierzu ist es möglich, dass das Anschlussgerät 17 mit Mitteln versehen und dazu geeignet ist, die von Satelliten 20 eines Positionierungssystems, z.B. von GPS-Satelliten (GPS = Global Positioning System), ausgesendeten Informationen zu verarbeiten und daraus seinen Ort automatisch abzuleiten. Ebenfalls ist es möglich, dass das Anschlussgerät 17 in der Lage ist, aus den von den schnurlosen öffentlichen Netzwerken, also insbesondere von den GSM- und UMTS-Netzwerken ausgesendeten Informationen auf seinen Ort und damit auf den Ort des mobilen LANs 16 zu schließen, z.B. Zellen-Identifikation (Cell-Id) und/oder Positionsmessungen zu verschiedenen Basisstationen (NMR = network measure radio).

Mit Hilfe des abgespeicherten Ortes des Anschlussgeräts 17 und damit des mobilen LANs 16 ist das Anschlussgerät 17 dazu geeignet, ortsabhängige Informationen zu erzeugen und weiterzuleiten. Diese ortsabhängigen Informationen können einerseits an die innerhalb des mobilen LANs 16 angeschlossenen Mitarbeiter bzw. deren Personalcomputer 18 oder Telefone 19 weitergegeben werden, wie auch andererseits über die öffentlichen Netzwerke 15 an die innerhalb des stationären LANs 10 angeschlossenen Mitarbeiter bzw. deren Personalcomputer 11 sowie an die Datenbanken 12 und den LAN Server 13.

Damit ist es möglich, dass die ortsabhängigen Informationen von den Datenbanken 12 dazu verwendet werden, dass automatisch immer nur diejenigen Daten aus der Datenbank 12 an den mobilen LAN 16 ausgelesen werden, die zu diesem mobilen LAN 16 gehören. So werden beispielsweise nur diejenigen Baupläne aus der Datenbank 12 ausgelesen und an den LAN 16 übermittelt, die zu der dem LAN 16 zugehörigen Baustelle gehören. Die Mitarbeiter der dortigen Baustelle müssen also nicht mehr dafür sorgen und darauf achten, dass sie auch wirklich die zu ihrer Baustelle zugehörigen Daten erhalten, sondern dies wird automatisch mit Hilfe der ortsabhängigen Informationen erreicht.

Weiterhin ist es möglich, dass die ortsabhängigen Informationen dazu verwendet werden, dass automatisch immer allen Mitarbeitern, die an den mobilen LAN 16 angeschlossen sind, alle den örtlichen Bereich des mobilen LANs 16 betreffenden Neuigkeiten und dergleichen zur Verfügung gestellt werden. So können beispielsweise Besprechungszeitpunkte und -orte, die die zu dem mobilen LAN 16 zugehörige Baustelle betreffen, automatisch innerhalb dieses mobilen LANs 16 verteilt werden, nicht jedoch innerhalb des stationären LANs 10. Damit wird erreicht, dass die zu der Baustelle des mobilen LANs 16 zugehörigen Neuigkeiten auch nur innerhalb dieser Baustelle verteilt werden, nicht jedoch außerhalb.

Wird die Baustelle fertiggestellt und beendet, so kann das Anschlussgerät 17 an einen anderen Ort verbracht und aufgestellt werden. Dort kann dann der neue Ort wieder manuell eingegeben oder automatisch ermittelt werden. Es können dann die bereits im Zusammenhang mit dem mobilen LAN 16 genannten Geräte an das Anschlussgerät 17 angeschlossen und auf diese Weise ein neuer mobiler LAN aufgebaut werden. Damit wird erreicht, dass das Anschlussgerät 17 immer denjenigen Ort abgespeichert hat, an dem sich der jeweilige mobile LAN befindet.

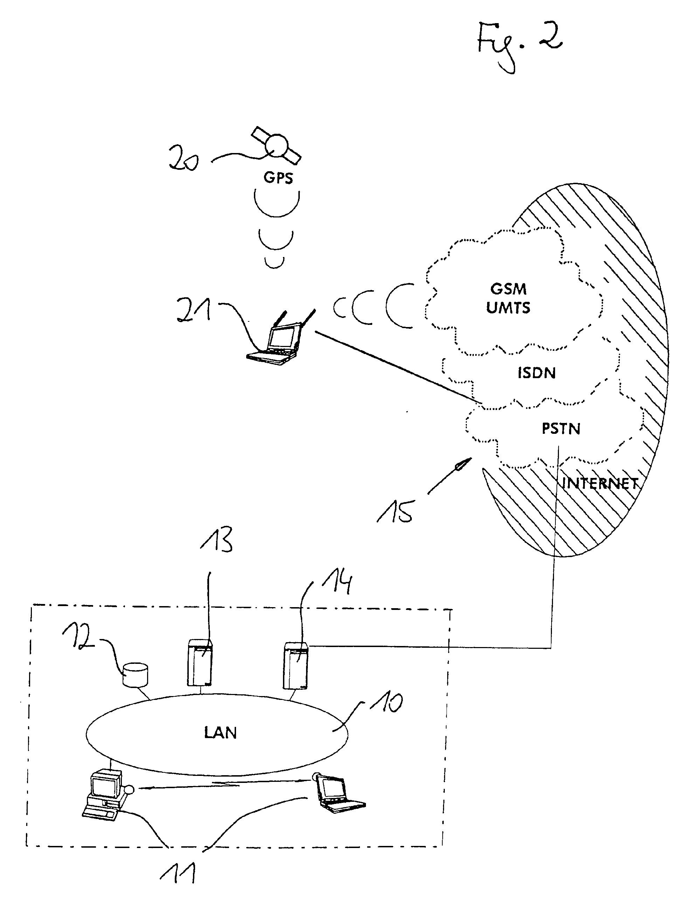

In der Figur 2 ist ein Telekommunikationssystem dargestellt, das weitgehend dem Telekommunikationssystem der Figur 1 entspricht. Aus diesem Grund sind übereinstimmende Bauteile mit gleichen Bezugsziffern gekennzeichnet.

Anstelle des mobilen LANs 16 der Figur 1 ist jedoch in der Figur 2 ein mobiler Personalcomputer 21 als Endgerät vorgesehen. In diesen Personalcomputer 21 ist ein Anschlussgerät integriert, das dem Anschlussgerät 17 der Figur 1 entspricht. In diesem Fall ist das in den mobilen Personalcomputer 21 integrierte Anschlussgerät vorzugsweise dazu geeignet, den Ort des mobilen Personalcomputers 21 automatisch, insbesondere mit Hilfe von Satelliten 20 zu ermitteln.

Anstelle des Personalcomputers 21 ist es auch möglich, dass nur ein mobiles Telefon mit integriertem Anschlussgerät als Endgerät vorhanden ist. Es wird darauf hingewiesen, dass es bei dem Personalcomputer 21 bzw. dem Telefon der Figur 2 gegebenenfalls nicht mehr möglich ist, das Anschlussgerät als separate Einheit zu lokalisieren.

Mit Hilfe des mobilen Personalcomputers 21 bzw. des mobilen Telefons ist es aufgrund des von dem integrierten Anschlussgerät ermittelten jeweiligen aktuellen Orts möglich, dass dem Benutzer des Personalcomputzers 21 bzw. Telefons ortsabhängige Informationen mitgeteilt werden. So ist es möglich, dass dem Benutzer die jeweils örtlich nächstgelegenen Tankstellen, Hotels, Krankenhäuser oder dergleichen automatisch mitgeteilt werden.

Dies kann dadurch erreicht werden, dass der Personalcomputer 21 bzw. das Telefon den jeweils aktuell ermittelten Ort an den stationären LAN 10 weitergibt, und dass dann von diesem LAN 10 nur diejenigen Daten an den Personalcomputer 21 bzw. das Telefon weitergegeben werden, die zu diesem Ort gehören. Damit wird vermieden, dass beispielsweise alle Tankstellen oder Hotels von den Datenbanken 12 an den Personalcomputer 21 bzw. das Telefon übermittelt werden.

Der Personalcomputer 21 bzw. das Telefon können dann von dem Benutzer beliebig örtlich bewegt werden. Aufgrund der vorzugsweise automatischen Ermittlung des jeweils aktuellen Orts erhält der Benutzer immer ohne weiteres Zutun die jeweils relevanten Daten.

## Patentansprüche

1. Verfahren zum Betreiben eines vorzugsweise mobilen Telekommunikationssystems, bei dem wenigstens ein Endgerät über ein Anschlussgerät (17) mit einem öffentlichen Netzwerk (15) gekoppelt ist, **dadurch gekennzeichnet, dass** der Ort des Anschlussgeräts (17) manuell eingegeben oder automatisch ermittelt wird.

2. Verfahren nach Anspruch 1, **dadurch gekennzeichnet, dass** der Ort des Anschlussgeräts (17) mit Hilfe von Satelliten (20), insbesondere mit Hilfe von GPS-Satelliten ermittelt wird.

3. Verfahren nach Anspruch 1, **dadurch gekennzeichnet, dass** der Ort des Anschlussgeräts (17) mit Hilfe von Informationen ermittelt wird, die von schnurlosen öffentlichen Netzwerken, insbesondere von GSM- und UMTS-Netzwerken, ausgesendet werden.

4. Verfahren nach einem der vorstehenden Ansprüche, bei dem an das öffentliche Netzwerk (15) ein stationärer LAN (10) angeschlossen ist, **dadurch gekennzeichnet, dass** nur solche Daten von dem LAN (10) an das Endgerät übermittelt werden, die zu dem Ort des Anschlussgeräts (17) gehören.

5. Telekommunikationssystem mit einem öffentlichen Netzwerk (15), mit dem wenigstens ein Endgerät über ein Anschlussgerät (17) gekoppelt ist, **dadurch gekennzeichnet, dass** in dem Anschlussgerät (17) der Ort des Anschlussgeräcs (17) abgespeichert ist.

6. Telekommunikationssystem nach Anspruch 5, **dadurch gekennzeichnet, dass** das Anschlussgerät (17) mit Mitteln versehen ist zur automatischen Ermittlung des Orts des Anschlussgeräts (17).

7. Telekommunikationssystem nach einem der Ansprüche 5 oder 6, **dadurch gekennzeichnet, dass** das Endgerät und das Anschlussgerät (17) Bestandteile eines vorzugsweise schnurlosen LANs (16) sind (Figur 1).

8. Telekommunikationssystem nach einem der Ansprüche 5 oder-6, **dadurch gekennzeichnet, dass** das Endgerät und das Anschlussgerät als ein integriertes Gerät, beispielsweise als ein Personalcomputer (21) oder als ein Telefon, ausgebildet sind (Figur 2).

9. Anschlussgerät (17) für ein Telekommunikationssystem, mit dem ein Endgerät mit einem öffentlichen Netzwerk (15) koppelbar ist (Figur 1), **dadurch gekennzeichnet, dass** in dem Anschlussgerät (17) der Ort des Anschlussgeräts (17) abgespeichert ist.

10. Personalcomputer (21) oder Telefon, in dem ein Anschlussgerät für ein Telekommunikationssystem integriert ist, mit dem der Personalcomputer (21) bzw. das Telefon mit einem öffentlichen Netzwerk (15) koppelbar ist (Figur 2), **dadurch gekennzeichnet, dass** in dem Personalcomputer (21) bzw. in dem Telefon oder in dem Anschlussgerät der Ort des Personalcomputers (21) bzw. des Telefons abgespeichert ist.
